# FASCICULE DE BREVET EUROPEEN

(11) **EP 4 469 346 B1**
(45) Date de publication et mention de la délivrance du brevet: **03.12.2025**
(21) Numéro de dépôt: 23703087.9
(22) Date de dépôt: 10.01.2023
(51) Int. Cl.: B64C 1/14

(54) **SYSTÈME DE CONTRÔLE DE LA VITESSE DE DÉPLACEMENT D'UNE PORTE COULISSANTE ET AÉRONEF ASSOCIÉ**
SYSTEM ZUR STEUERUNG DER BEWEGUNGSGESCHWINDIGKEIT EINER SCHIEBETÜR UND ZUGEHÖRIGES FLUGZEUG
SYSTEM FOR CONTROLLING THE SPEED OF MOVEMENT OF A SLIDING DOOR AND ASSOCIATED AIRCRAFT

(30) Priorité: 28.01.2022 FR 2200728
(43) Date de publication de la demande: 04.12.2024
(73) Titulaire: Safran Electronics & Defense, 75015 Paris (FR)
(72) Inventeur: HORS, Daniel, 77550 MOISSY-CRAMAYEL (FR); BUR, Célina, 77550 MOISSY CRAMAYEL (FR)
(74) Mandataire: Casalonga
(86) Numéro de dépôt international: PCT/FR2023/050035
(87) Numéro de publication internationale: WO 2023/144481

(56) Documents cités:
- EP-A1- 3 326 904
- EP-A1- 3 747 760
- FR-A1- 3 072 707
- US-A1- 2013 019 432

## Description

### Domaine technique de l'invention

L'invention concerne les systèmes d'ouverture de portes coulissantes d'aéronef, et plus particulièrement les systèmes de contrôle de la vitesse de déplacement de portes coulissantes d'aéronefs et des aéronefs équipés d'au moins un tel système.

### Etat de la technique antérieure

Généralement, un aéronef comprend une porte coulissante latérale prévue pour s'ouvrir en cours de vol par exemple lors d'un parachutage ou lors d'un hélitreuillage, lorsque l'aéronef est un hélicoptère.

Lors de son ouverture, la porte coulissante est soumise à des forces aérodynamiques pouvant générer des vitesses importantes d'ouverture de la porte.

Les forces aérodynamiques appliquées sur la porte coulissante sont proportionnelles au carré de la vitesse de vol de l'aéronef.

Généralement, un hélicoptère est équipé de vérins amortisseurs de fin de course permettant d'amortir le choc généré par la porte coulissante arrivant en butée, préservant ainsi la structure de l'hélicoptère.

Cependant, de tels vérins ne permettent pas de contrôler la vitesse de la porte coulissante lors de sa course, notamment aux vitesses élevées de vol de l'hélicoptère.

Les documents FR3072707 et EP3747760 divulguent un dispositif de contrôle pour ralentir la fermeture d'une porte coulissante guidée par un rail de guidage et comportant un enrouleur et une sangle supportée par l'enrouleur et reliée à la porte.

Le rail de guidage comporte une butée.

L'enrouleur comporte en outre un frein centrifuge relié à la sangle par l'intermédiaire d'un arbre de sorte que lorsque la porte coulissante s'ouvre, le frein centrifuge ralentit la vitesse d'ouverture de la porte coulissante en appliquant un couple résistif sur l'arbre.

Le frein centrifuge comporte des masselottes mobiles maintenues radialement sur le tambour par des ressorts et frottant sur une surface métallique disposée autour du tambour pour générer le couple résistif.

Le couple résistif est proportionnel au carré de la vitesse de rotation de l'arbre et à la masse des masselottes.

Comme la vitesse de rotation de l'arbre est faible, il est nécessaire d'implémenter des masselottes massives dans le dispositif augmentant la masse et l'encombrement dudit dispositif, et réduisant d'autant la capacité de chargement de l'aéronef.

En outre, si la butée de la porte coulissante est endommagée ou inexistante, la porte coulissante peut s'échapper du rail de guidage et rester accrocher à la sangle.

Le ballant de la porte coulissante peut projeter la porte contre l'aéronef en vol endommageant l'aéronef.

### Exposé de l'invention

Le but de l'invention est de pallier tout ou partie de ces inconvénients.

Au vu de ce qui précède, l'invention a pour objet un système de contrôle de la vitesse d'ouverture d'une porte coulissante pour aéronef, le système comprenant un dispositif de freinage mécanique de la porte, le dispositif de freinage comportant un arbre de transmission et un amortisseur centrifuge comportant un arbre résistif relié à l'arbre de transmission, et des moyens de liaison destinés à être reliés à la porte coulissante et coopérant avec l'arbre de transmission de sorte que lorsque la porte coulissante se déplace selon une direction prédéterminée, les moyens de liaison entraînent l'arbre de transmission et l'amortisseur centrifuge applique un couple résistif sur l'arbre de transmission pour contrôler la vitesse de déplacement de la porte.

Le système comprend un réducteur reliant l'arbre résistif à l'arbre de transmission de sorte que la vitesse de rotation de l'arbre résistif est supérieure à celle de l'arbre de transmission lorsque la porte coulissante se déplace selon la direction prédéterminée.

La valeur du couple résistif est proportionnelle au carré de la vitesse de rotation de l'arbre résistif et à la masse des masselottes.

Le réducteur amplifie la vitesse de rotation de l'arbre résistif de sorte que pour une valeur de couple résistif donnée, la masse des masselottes peut être réduite permettant de diminuer la masse et l'encombrement du dispositif facilitant ainsi l'intégration du système dans l'aéronef.

Avantageusement, l'amortisseur centrifuge comprend un cylindre revêtu d'un matériau de friction et des masselottes disposées à l'intérieur du cylindre et reliées à l'arbre résistif par des biellettes de sorte que les masselottes frottent sur le matériau de friction sous l'effet de la force centrifuge lorsque la vitesse de rotation de l'arbre résistif est supérieure ou égale à un seuil de vitesse prédéterminé.

De préférence, le dispositif de freinage comprend en outre un dispositif d'embrayage reliant l'arbre résistif à la sangle de sorte que le dispositif d'embrayage est embrayé lorsque la porte se déplace selon la direction prédéterminée et est débrayé lorsque la porte se déplace selon une autre direction que la direction prédéterminée.

Avantageusement, l'aéronef comporte un rail de guidage de longueur prédéterminée guidant la porte coulissante, les moyens de liaison étant configurés pour immobiliser et retenir la porte coulissante dans le rail de guidage lorsque la course de ladite porte selon la direction prédéterminée est supérieure à la longueur du rail.

De préférence, l'aéronef comporte un rail de guidage de longueur prédéterminée guidant la porte coulissante, les moyens de liaison étant configurés pour libérer la porte coulissante lorsque la course de ladite porte selon la direction prédéterminée est supérieure à la longueur du rail.

Avantageusement, les moyens de liaison comprennent une sangle, le dispositif de freinage comprend en outre un mécanisme d'enroulement configuré pour enrouler la sangle autour de l'arbre de transmission lorsque la porte se déplace selon une autre direction que la direction prédéterminée.

De préférence, le système comporte un tambour enrouleur supportant la sangle, le tambour étant relié à l'arbre de transmission.

Avantageusement, la longueur de la sangle tendue entre la porte et l'arbre de transmission est inférieure à la longueur du rail.

De préférence, la sangle et le tambour comprennent des moyens de désolidarisation pour désolidariser la sangle de la porte coulissante ou de l'arbre de transmission lorsque la course de ladite porte selon la direction prédéterminée est supérieure à la longueur du rail.

Il est également proposé un aéronef comportant une porte coulissante et un système tel que défini précédemment relié à la porte coulissante.

### Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1] illustre schématiquement un aéronef comportant une porte coulissante selon l'invention ;
[Fig 2] illustre schématiquement une vue partielle de l'aéronef comportant un système de contrôle de la vitesse d'ouverture de la porte coulissante selon l'invention ;
[Fig 3] illustre schématiquement une vue partielle de l'intérieur de la cabine de l'aéronef selon l'invention ;
[Fig 4] illustre schématiquement un exemple de système de contrôle de la vitesse d'ouverture de la porte coulissante selon l'invention ;
[Fig 5] illustre schématiquement un exemple de réalisation d'un dispositif d'embrayage selon l'invention, et
[Fig 6]
[Fig 7]

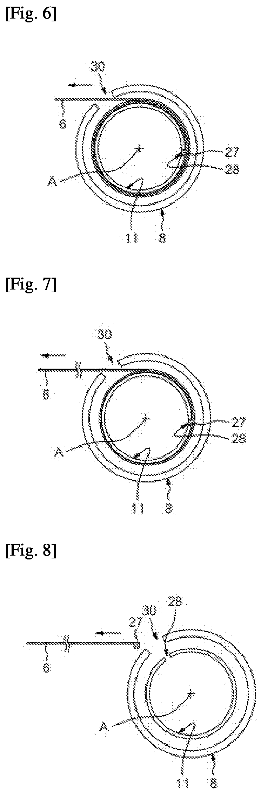

[Fig 8] illustrent schématiquement un exemple de moyens de liaison selon l'invention.

### Exposé détaillé d'au moins un mode de réalisation

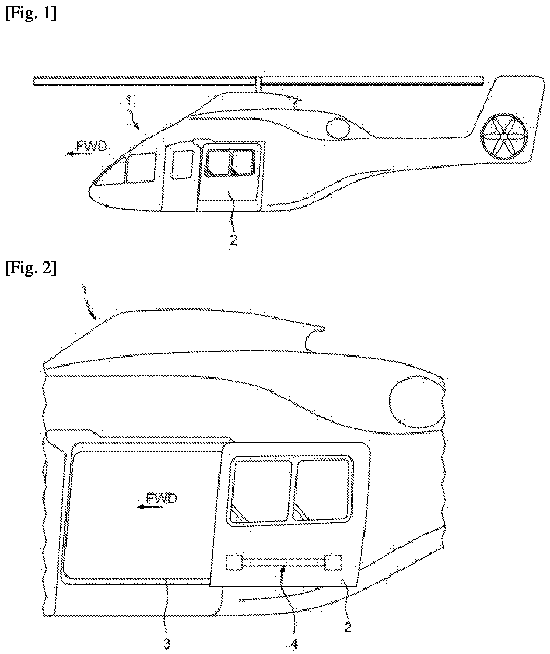

On se réfère à la figure 1 qui illustre schématiquement un aéronef 1 comportant une porte coulissante 2, représentée en position fermée, et prévue pour s'ouvrir en vol, un rail de guidage (non représenté) guidant la porte coulissante 2, et un système 4 de contrôle de la vitesse de déplacement de la porte coulissante 2 (non représenté).

Le sens de déplacement normal de l'aéronef est représenté par une flèche FWD dirigée vers l'avant. La porte, quant à elle, s'ouvre vers l'arrière et est donc soumise aux forces aérodynamiques engendrées lors du déplacement de l'aéronef 1.

On suppose que le système 4 contrôle la vitesse d'ouverture de la porte coulissante 2.

En variante, le système 4 contrôle la vitesse de fermeture de la porte coulissante 2.

L'aéronef 1 tel que représenté est un hélicoptère.

Bien entendu, l'aéronef 1 peut être tout type d'aéronef comportant une porte coulissante prévue pour s'ouvrir en vol, par exemple un avion comportant une porte coulissante.

La figure 2 illustre une vue partielle de l'aéronef 1, de l'extérieur, la porte coulissante 2 étant ouverte et engagée dans le rail de guidage 3.

La porte coulissante 2 est en appui contre une butée (non représentée) du rail de guidage 3.

Le système 4 de contrôle de la vitesse de déplacement de la porte coulissante 2 (représenté en pointillées) est placé dans la cabine de l'aéronef 1.

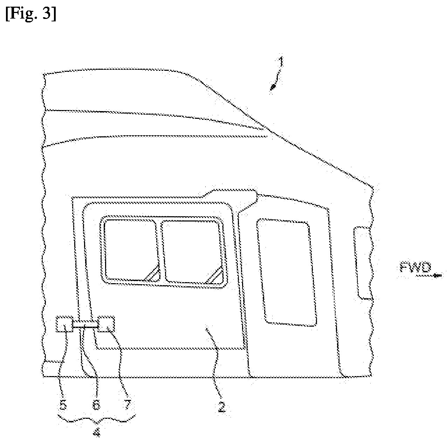

La figure 3 illustre une vue partielle de l'intérieur de la cabine de l'aéronef 1, la porte coulissante 2 étant fermée.

Le système 4 de contrôle comprend un dispositif de freinage 5 mécanique pour limiter la vitesse de déplacement de la porte coulissante 2 et monté sur la structure de la cabine de l'aéronef 1, et des moyens de liaison comportant une sangle 6 enroulée dans le dispositif 5 et attachée à un point 7 de fixation de la porte coulissante 2.

Le dispositif de freinage 5 limite ici la vitesse d'ouverture de la porte coulissante 2.

En variante, le dispositif de freinage 5 peut être monté sur la porte coulissante 2, et la sangle 6 est fixée à un point de fixation de la structure de la cabine de l'aéronef 1.

Les moyens de liaison peuvent en outre immobiliser et retenir la porte coulissante 2 dans le rail de guidage 3 lorsque la course de la porte coulissante 2 est supérieure à la longueur du rail de guidage pour empêcher que la porte coulissante 2 sorte du rail de guidage 3 et détériore l'aéronef 1.

Les moyens de liaison permettent d'empêcher que la porte coulissante 2 sorte du rail de guidage 3 lorsque la butée du rail de guidage 3 est endommagée ou inexistante de manière à empêcher que la porte coulissante 2 retenue par les seuls moyens de liaison endommage l'aéronef 1.

En variante, les moyens de liaison libèrent la porte coulissante 2 lorsque la course de la porte coulissante 2 est supérieure à la longueur du rail de guidage.

Comme la trajectoire de la porte coulissante 2 est dépendante des caractéristiques géométriques de la porte coulissante 2, de l'aéronef 1 et du rail de guidage 3, la trajectoire peut être prédéterminée et optimisée de manière à expulser la porte coulissante 2 de l'aéronef 1 en vol sans cogner contre une partie sensible de l'aéronef 1 permettant de poursuivre le vol en sécurité.

Le système 4 peut être monté indifféremment d'un côté ou de l'autre de l'aéronef 1 par rapport à un axe de symétrie longitudinal de l'aéronef 1, suivant la position de la porte.

Lorsque la porte coulissante 2 s'ouvre, la sangle 6 se déploie en se déroulant et s'allonge sous l'effet de la translation de la porte coulissante 2.

Selon un autre mode de réalisation, les moyens de liaison comprennent une crémaillère fixée sur la porte coulissante 2 et le dispositif 5 comprend un pignon coopérant avec la crémaillère.

Selon encore un autre mode de réalisation, les moyens de liaison comprennent une courroie reliée d'une part au dispositif 5 et, d'autre part, à une poulie solidaire de la porte coulissante 2.

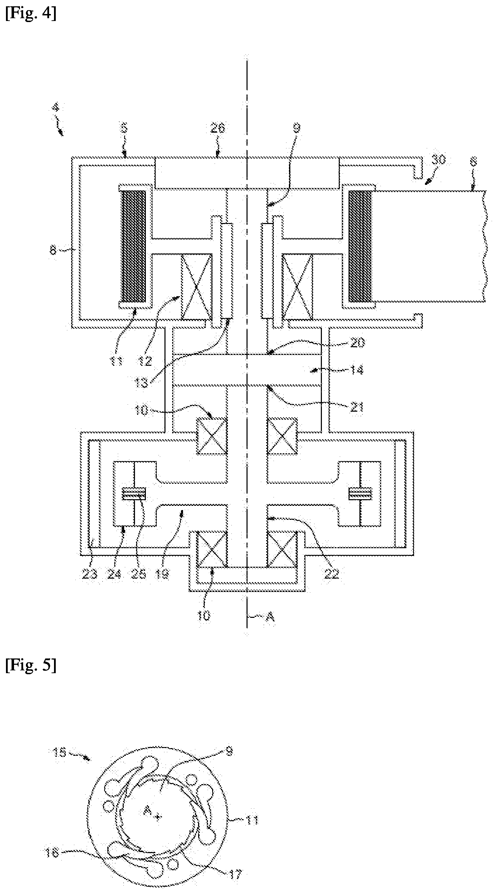

La figure 4 illustre un exemple de réalisation du système 4.

On retrouve le dispositif de freinage 5 et la sangle 7.

Le dispositif de freinage 5 comprend un carter 8 comprenant un arbre de transmission 9 d'axe central A maintenu en rotation dans le carter 7 par des roulements 12 par exemple à billes et un passage 30 permettant à la sangle 6 de traverser le carter 8. Bien entendu, les roulements 10 peuvent être d'un autre type, par exemple à rouleaux ou de type paliers lisses.

Le dispositif de freinage 5 comprend en outre un tambour 11 enrouleur supportant la sangle 6 et maintenu en rotation dans le carter 8 par les roulements 12.

Le tambour 11 est relié à une première extrémité de l'arbre de transmission 9 par l'intermédiaire d'un dispositif d'embrayage 13.

Le dispositif 5 comprend en outre un réducteur 14.

Le dispositif d'embrayage 13 est embrayé lors du déroulement de la sangle 6 de sorte que la sangle 6 entraîne l'arbre de transmission 9, et débrayé lors de l'enroulement de la sangle 6 lorsque la porte coulissante 2 se referme facilitant l'enroulement de la sangle 6.

En variante, le dispositif 5 ne comprend pas le dispositif d'embrayage 13, l'arbre de transmission 9 étant entraîné par la sangle 6 lors de son enroulement sur le tambour 11.

Le dispositif d'embrayage 13 comprend par exemple une roue libre 15 telle que représentée à la figure 5.

La roue libre 15 comprend par exemple des cliquets 16 coopérant avec des encoches 17 de sorte que lors du déroulement de la sangle 6, les cliquets 16 sont en prises dans les encoches 17, et de sorte que lors de l'enroulement de la sangle 6 autour de l'arbre de transmission 9 (fermeture de la porte coulissante 2), les cliquets 16 ne sont plus en prise dans les encoches 17.

Les cliquets 16 sont disposés sur le tambour 11, et les encoches 17 sont disposées sur l'arbre de transmission 9.

En variante, le dispositif d'embrayage 13 comprend une roue libre à rouleaux.

La deuxième extrémité de l'arbre de transmission 9 est reliée à un amortisseur centrifuge 19 par l'intermédiaire du réducteur 14.

Le réducteur 14 comprend une entrée 20 reliée à l'arbre de transmission 9 et une sortie 21 reliée à un arbre résistif 22 de l'amortisseur centrifuge 19.

L'arbre résistif 22 est maintenu en rotation dans le carter 7 par des roulements 10 par exemple à billes. Bien entendu, les roulements 10 peuvent être d'un autre type, par exemple à rouleaux ou de type paliers lisses.

Lorsque la porte coulissante 2 s'ouvre, l'amortisseur centrifuge 19 applique un couple résistif Cr sur l'arbre de transmission 9 par l'intermédiaire de l'arbre résistif 22 pour contrôler la vitesse de déplacement de la porte coulissante 2.

L'amortisseur centrifuge 19 comprend un cylindre 23 revêtu d'un matériau de friction et des masselottes 24 disposées à l'intérieur du cylindre et reliées à l'arbre résistif 22 par des biellettes 25.

Le cylindre 23 est fixé dans sur le carter 8.

Lorsque la vitesse de rotation de l'arbre résistif 22 est supérieure ou égale à un seuil de vitesse prédéterminé, sous l'effet de la force centrifuge, les masselottes 24 mobiles par rapport à l'arbre résistif 22 frottent sur le matériau de friction générant le couple résistif Cr proportionnel au carré de la vitesse de rotation de l'arbre résistif 22.

Le seuil de vitesse permet d'optimiser la vitesse d'ouverture de la porte coulissante 2 à basse vitesse (inférieure au seuil de vitesse) en définissant un couple résistif Cr nul.

Le réducteur 14 est dimensionné de sorte que la vitesse de rotation de l'arbre résistif 22 est supérieure à celle de l'arbre de transmission 9 lorsque la porte coulissante 2 s'ouvre et comprend par exemple un réducteur épicycloïdal.

Le réducteur 14 permet d'amplifier la vitesse de rotation de l'arbre résistif 22 de l'amortisseur centrifuge 19, la vitesse de rotation de l'arbre résistif 22 étant égale à la vitesse de rotation de l'arbre de transmission 9 multipliée par le rapport du réducteur 14.

Comme la valeur du couple résistif Cr est proportionnelle au carré de la vitesse de rotation de l'arbre résistif 22 et à la masse des masselottes 24, et que le réducteur 14 amplifie la vitesse de rotation de l'arbre résistif 22, pour une valeur de couple résistif Cr donnée, la masse des masselottes 24 peut être réduite par rapport à des masselottes d'un dispositif de freinage connu de l'état de la technique permettant de diminuer la masse et l'encombrement du dispositif 5 facilitant ainsi l'intégration du système 4 dans l'aéronef 1.

Le dispositif 4 peut en outre comprendre un mécanisme d'enroulement 26 (figure 4) pour enrouler la sangle 6 autour de l'arbre de transmission 9 lorsque la porte coulissante 2 se ferme.

Le mécanisme d'enroulement 26 comprend par exemple une cassette à ressort spiral à force constante.

Lorsque le dispositif 4 est équipée du dispositif d'embrayage 13, le réducteur 14 et l'amortisseur centrifuge 19 sont désaccouplés du tambour 11 facilitant l'enroulement de la sangle 6 autour du tambour 11.

La longueur de la sangle 6 tendue entre la porte coulissante 2 et l'arbre de transmission 9 peut être choisie comme étant inférieure à la longueur du rail de guidage 3 de sorte que la sangle 6 immobilise et retient la porte coulissante 2 lorsque la course de la porte coulissante 2 est supérieure à la longueur du rail de guidage 3 pour empêcher que la porte coulissante 2 sorte du rail de guidage 3 et détériore l'aéronef 1 sous l'effet du ballant projetant la porte coulissante 2 maintenue par la seule sangle 6 contre l'aéronef 1.

En variante, la sangle 6 est fixée de sorte qu'elle se désolidarise de la porte coulissante 2 ou de l'arbre de transmission 9 lorsque la course de ladite porte 2 est supérieure à la longueur du rail de guidage 3.

La sangle 6 libère la porte coulissante 2 lorsque la course de la porte coulissante 2 est supérieure à la longueur du rail de guidage 3.

Les figures 6, 7 et 8 illustrent un exemple de moyens de liaison libérant la porte coulissante 2 lorsque la course de la porte coulissante est supérieure à la longueur du rail du guidage 3 ne comportant pas de butée, la sangle 6 se désolidarisant du tambour 11 et de l'arbre de transmission 9.

La sangle 6 comporte une excroissance 27 et est enroulée avec un ou plusieurs tours de garde autour du tambour 11 comportant une ouverture 28 de sorte que l'excroissance 27 insérée dans l'ouverture 26 maintient la sangle 6 solidaire du tambour 11.

Lorsque la porte coulissante 2 est en contact et maintenue par la butée du rail de guidage 3, la sangle 6 est maintenue sur le tambour comme représenté à la figure 6.

Lorsque la butée du rail de guidage 3 est inexistante ou incapable de maintenir la porte coulissante 2, la sangle 6 se déroule complètement (figure 7) et est maintenue sur le tambour par l'excroissance 27 insérée dans l'ouverture 26.

Lorsque l'ouverture 28 est en face du passage 30 du carter 8, l'excroissance 27 s'échappe de l'ouverture 28 de sorte que la sangle 6 s'échappe du dispositif 4.

L'excroissance 27 coopérant avec l'ouverture 26 forment des moyens de désolidarisation.

## Revendications

1. Système (4) de contrôle de la vitesse d'ouverture d'une porte coulissante (2) pour aéronef (1), le système (4) comprenant un dispositif de freinage mécanique (5) de la porte, le dispositif de freinage mécanique (5) comportant un arbre de transmission (9) et un amortisseur centrifuge (19) comportant un arbre résistif (22) relié à l'arbre de transmission, et des moyens de liaison (6) destinés à être reliés à la porte coulissante et coopérant avec l'arbre de transmission de sorte que lorsque la porte coulissante se déplace selon une direction prédéterminée, les moyens de liaison entraînent l'arbre de transmission et l'amortisseur centrifuge applique un couple résistif sur l'arbre de transmission pour contrôler la vitesse de déplacement de la porte, **caractérisé en ce que** le système comprend un réducteur (14) reliant l'arbre résistif à l'arbre de transmission de sorte que la vitesse de rotation de l'arbre résistif est supérieure à celle de l'arbre de transmission lorsque la porte coulissante se déplace selon la direction prédéterminée.

2. Système selon la revendication 1, dans lequel l'amortisseur centrifuge (19) comprend un cylindre (23) revêtu d'un matériau de friction et des masselottes (24) disposées à l'intérieur du cylindre et reliées à l'arbre résistif (22) par des biellettes (25) de sorte que les masselottes frottent sur le matériau de friction sous l'effet de la force centrifuge lorsque la vitesse de rotation de l'arbre résistif est supérieure ou égale à un seuil de vitesse prédéterminé.

3. Système selon l'une des revendications 1 ou 2, dans lequel le dispositif de freinage (5) comprend en outre un dispositif d'embrayage (13) reliant l'arbre résistif (22) à la sangle (6) de sorte que le dispositif d'embrayage est embrayé lorsque la porte (2) se déplace selon la direction prédéterminée et est débrayé lorsque la porte se déplace selon une autre direction que la direction prédéterminée.

4. Système selon l'une des revendications 1 à 3, l'aéronef (1) comportant un rail de guidage (3) de longueur prédéterminée guidant la porte coulissante (2), les moyens de liaison (6) étant configurés pour immobiliser et retenir la porte coulissante dans le rail de guidage lorsque la course de ladite porte selon la direction prédéterminée est supérieure à la longueur du rail.

5. Système selon l'une des revendications 1 à 3, l'aéronef (1) comportant un rail de guidage (3) de longueur prédéterminée guidant la porte coulissante (2), les moyens de liaison étant configurés pour libérer la porte coulissante lorsque la course de ladite porte selon la direction prédéterminée est supérieure à la longueur du rail.

6. Système selon l'une des revendications 1 à 5, dans lequel les moyens de liaison comprennent une sangle (6), le dispositif de freinage (5) comprenant en outre un mécanisme d'enroulement (26) configuré pour enrouler la sangle autour de l'arbre de transmission (9) lorsque la porte se déplace selon une autre direction que la direction prédéterminée.

7. Système selon la revendication 6, comportant un tambour enrouleur (11) supportant la sangle (6), le tambour étant relié à l'arbre de transmission (9).

8. Système selon l'une des revendications 6 ou 7 dépendantes de la revendication 4, dans lequel la longueur de la sangle (6) tendue entre la porte (2) et l'arbre de transmission (9) est inférieure à la longueur du rail (3).

9. Système selon l'une des revendications 6 ou 7 dépendantes de la revendication 5, dans lequel la sangle (6) et le tambour comprennent des moyens de désolidarisation pour désolidariser la sangle (6) de la porte coulissante (2) ou de l'arbre de transmission (9) lorsque la course de ladite porte selon la direction prédéterminée est supérieure à la longueur du rail.

10. Aéronef comprenant une porte coulissante et un système (3) selon l'une des revendications 1 à 9 relié à la porte coulissante (2).

## Patentansprüche

1. System (4) zur Steuerung der Öffnungsgeschwindigkeit einer Schiebetür (2) für Luftfahrzeuge (1), wobei das System (4) eine mechanische Bremsvorrichtung (5) der Tür umfasst, wobei die mechanische Bremsvorrichtung (5) eine Antriebswelle (9) und einen Fliehkraftdämpfer (19), der eine mit der Antriebswelle verbundene Widerstandswelle (22) aufweist, und Verbindungsmittel (6) aufweist, die dazu bestimmt sind, mit der Schiebetür verbunden zu sein, und mit der Antriebswelle zusammenwirken, sodass, wenn sich die Schiebetür in eine vorbestimmte Richtung bewegt, die Verbindungsmittel die Antriebswelle antreiben und der Fliehkraftdämpfer ein Widerstandsmoment auf die Antriebswelle ausübt, um die Bewegungsgeschwindigkeit der Tür zu steuern, **dadurch gekennzeichnet, dass** das System ein Untersetzungsgetriebe (14) umfasst, das die Widerstandswelle mit der Antriebswelle verbindet, sodass die Drehzahl der Widerstandswelle höher ist als die der Antriebswelle, wenn sich die Schiebetür in die vorgegebene Richtung bewegt.

2. System nach Anspruch 1, wobei der Fliehkraftdämpfer (19) einen Zylinder (23), der mit einem Reibmaterial beschichtet ist, und Gewichte (24), die im Inneren des Zylinders angeordnet und mit der Widerstandswelle (22) durch Verbindungsstangen (25) verbunden sind, umfasst, sodass die Gewichte unter der Wirkung der Fliehkraft an dem Reibmaterial reiben, wenn die Drehzahl der Widerstandswelle größer oder gleich einer vorbestimmten Drehzahlschwelle ist.

3. System nach einem der Ansprüche 1 oder 2, wobei die Bremsvorrichtung (5) ferner eine Kupplungsvorrichtung (13) umfasst, die die Widerstandswelle (22) mit dem Gurt (6) verbindet, sodass die Kupplungsvorrichtung eingekuppelt ist, wenn sich die Tür (2) in die vorbestimmte Richtung bewegt, und ausgekuppelt ist, wenn sich die Tür in eine andere Richtung als die vorbestimmte Richtung bewegt.

4. System nach einem der Ansprüche 1 bis 3, wobei das Luftfahrzeug (1) eine Führungsschiene (3) mit vorbestimmter Länge aufweist, die die Schiebetür (2) führt, wobei die Verbindungsmittel (6) so eingerichtet sind, dass sie die Schiebetür in der Führungsschiene immobilisieren und halten, wenn der Hub der Tür gemäß der vorbestimmten Richtung größer ist als die Länge der Schiene.

5. System nach einem der Ansprüche 1 bis 3, wobei das Luftfahrzeug (1) eine Führungsschiene (3) mit vorbestimmter Länge aufweist, die die Schiebetür (2) führt, wobei die Verbindungsmittel so eingerichtet sind, dass sie die Schiebetür freigeben, wenn der Hub der Schiebetür gemäß der vorbestimmten Richtung größer ist als die Länge der Schiene.

6. System nach einem der Ansprüche 1 bis 5, wobei die Verbindungsmittel einen Gurt (6) umfassen, wobei die Bremsvorrichtung (5) ferner einen Aufrollmechanismus (26) umfasst, der so eingerichtet ist, dass er den Gurt um die Antriebswelle (9) wickelt, wenn sich die Tür in eine andere Richtung als die vorbestimmte Richtung bewegt.

7. System nach Anspruch 6, das eine Wickeltrommel (11) aufweist, die den Gurt (6) trägt, wobei die Trommel mit der Antriebswelle (9) verbunden ist.

8. System nach einem der von Anspruch 4 abhängigen Ansprüche 6 oder 7, wobei die Länge des zwischen der Tür (2) und der Antriebswelle (9) gespannten Gurts (6) kleiner ist als die Länge der Schiene (3).

9. System nach einem der von Anspruch 5 abhängigen Ansprüche 6 oder 7, wobei der Gurt (6) und die Trommel Trennmittel umfassen, um den Gurt (6) von der Schiebetür (2) oder der Antriebswelle (9) zu trennen, wenn der Weg der Tür gemäß der vorbestimmten Richtung größer ist als die Länge der Schiene.

10. Luftfahrzeug, das eine Schiebetür und ein mit der Schiebetür (2) verbundenes System (3) nach einem der Ansprüche 1 bis 9 umfasst.

## Claims

1. System (4) for controlling the speed of opening of a sliding door (2) for an aircraft (1), the system (4) comprising a mechanical braking device (5) for the door, the mechanical braking device (5) having a transmission shaft (9) and a centrifugal damper (19) having a resistance shaft (22) connected to the transmission shaft, and linking means (6) that are designed to be connected to the sliding door and cooperating with the transmission shaft so that, when the sliding door moves in a predetermined direction, the linking means drive the transmission shaft and the centrifugal damper applies a resistance torque to the transmission shaft in order to control the speed of movement of the door, **characterized in that** the system comprises a speed reducer (14) connecting the resistance shaft to the transmission shaft so that the speed of rotation of the resistance shaft is greater than that of the transmission shaft when the sliding door moves in the predetermined direction.

2. System according to claim 1, wherein the centrifugal absorber (19) comprises a cylinder (23) coated with a friction material and flyweights (24) disposed inside the cylinder and connected to the resistance shaft (22) by connecting links (25) so that the flyweights rub against the friction material under the effect of the centrifugal force when the speed of rotation of the resistance shaft is greater than or equal to a predetermined speed threshold.

3. System according to one of claims 1 or 2, wherein the braking device (5) further comprises a clutching device (13) connecting the resistance shaft (22) to the belt (6) so that the clutching device is clutched when the door (2) moves in the predetermined direction and is declutched when the door moves in a direction other than the predetermined direction.

4. System according to one of claims 1 to 3, the aircraft (1) having a guide rail (3) of predetermined length guiding the sliding door (2), the linking means (6) being configured to immobilize and retain the sliding door in the guide rail when the travel of said door in the predetermined direction is longer than the length of the rail.

5. System according to one of claims 1 to 3, the aircraft (1) having a guide rail (3) of predetermined length guiding the sliding door (2), the linking means being configured to release the sliding door when the travel of said door in the predetermined direction is longer than the length of the rail.

6. System according to one of claims 1 to 5, wherein the linking means comprise a belt (6), the braking device (5) further comprising a winding mechanism (26) configured to wind the belt around the transmission shaft (9) when the door moves in a direction other than the predetermined direction.

7. System according to claim 6, having a winding drum (11) supporting the belt (6), the drum being connected to the transmission shaft (9).

8. System according to one of claims 6 or 7 dependent on claim 4, wherein the length of the belt (6) tensioned between the door (2) and the transmission shaft (9) is shorter than the length of the rail (3).

9. System according to one of claims 6 or 7 dependent on claim 5, wherein the belt (6) and the drum comprise separation means for separating the belt (6) from the sliding door (2) or from the transmission shaft (9) when the travel of said door in the predetermined direction is longer than the length of the rail.

10. Aircraft comprising a sliding door and a system (3) according to one of claims 1 to 9 connected to the sliding door (2).
